## Europäisches Patentamt

## European Patent Office

## Office européen des brevets

(11) Veröffentlichungsnummer: **0 091 551**
**B1**

(12) **EUROPÄISCHE PATENTSCHRIFT**

(45) Veröffentlichungstag der Patentschrift:
**05.02.86**

(51) Int. Cl.⁴: **B 01 D 53/36,** C 01 B 17/04,
B 01 J 23/74, B 01 J 8/06

(21) Anmeldenummer: **83101937.7**

(22) Anmeldetag: **28.02.83**

(54) Verfahren zur Entschweflung von H2S-haltigen Gasen.

(30) Priorität: 11.03.82 DE 3208695

(43) Veröffentlichungstag der Anmeldung:
19.10.83 Patentblatt 83/42

(45) Bekanntmachung des Hinweises auf die Patenterteilung:
05.02.86 Patentblatt 86/6

(84) Benannte Vertragsstaaten:
BE DE FR GB IT NL

(73) Patentinhaber: BASF Aktiengesellschaft,
Carl-Bosch-Strasse 38, D-6700 Ludwigshafen (DE)

(72) Erfinder: Broecker, Franz Josef, Dr., Schwanthaler
Allee 20, D-6700 Ludwigshafen (DE)
Erfinder: Gettert, Hans, Dr., Muldweg 2,
D-6945 Gross-Sachsen (DE)
Erfinder: Kaempfer, Knut, Dr., Petersstrasse 1,
D-6700 Ludwigshafen (DE)

(56) Entgegenhaltungen:
DE - A - 1 467 100
DE - A - 2 748 643
DE - A - 2 816 824
DE - B - 1 178 046
DE - B - 1 183 478
US - A - 3 393 050

ULLMANNS ENCYKLOPÄDIE DER TECHNISCHEN
CHEMIE, 3. Auflage, 1. Band, 1951, URBAN &
SCHWARZENBERG, München-Berlin, Seiten 903-911

**Beschreibung**

Die vorliegende Erfindung betrifft ein Verfahren zur Entschwefelung von $H_2S$-haltigen Gasen durch direkte katalytische Oxidation des $H_2S$ zu elementarem Schwefel mit Sauerstoff enthaltenden Gasen.

In der US-Patentschrift 3 393 050 ist bereits ein Verfahren zur direkten katalytischen Oxidation von $H_2S$ zu elementarem Schwefel durch Umsetzung mit Luft oder $SO_2$ in einem Röhrenreaktor beschrieben. Der verwendete Röhrenreaktor ist in der Weise aufgebaut, daß sich in den Rohren korbartige Einbauten befinden, in denen der Katalysator angeordnet ist. Zwischen dem Katalysatorkorb und der Rohrwand befindet sich ein ringförmiger Zwischenraum. In dem Röhrenreaktor müssen gleichzeitig die Reaktionswärme und der gebildete elementare Schwefel in flüssiger Form abgeführt werden, um zu einem zufriedenstellenden Umsatz zu gelangen. Hierzu wird der gebildete Schwefel an der von außen mit Wasser gekühlten Rohrwandung kondensiert und am Ausgang des Rohrreaktors gesammelt und abgeleitet. Als Katalysatoren werden bei diesen Verfahren Aluminiumoxid, Aluminiumsilikat oder Calciumaluminiumsilikat verwendet. Dieses Verfahren ist apparativ sehr aufwendig. Ein weiterer Nachteil des bekannten Verfahrens besteht darin, daß durch die spezifische Anordnung des Katalysators keine definierten Reaktionstemperaturen und damit auch keine konstanten Umsätze eingehalten werden können.

Es bestand daher Bedarf nach einem Verfahren zur Entschwefelung von $H_2S$-haltigen Gasen, bei dem die Nachteile der bekannten Verfahren vermieden werden können.

Es wurde nun ein vorteilhaftes Verfahren gefunden zur Entschwefelung von $H_2S$-haltigen Gasen durch direkte katalytische Oxidation des $H_2S$ zu elementarem Schwefel mit Sauerstoff enthaltenden Gasen in einem Röhrenreaktor unter indirekter Wärmeabführung der Reaktionswärme mit einem Kühlmittel und unter Kondensation des gebildeten Schwefels, welches dadurch gekennzeichnet ist, daß sich entweder der Katalysator im Mantelraum um die Rohre und das Kühlmittel in den Rohren des Röhrenreaktors oder das Kühlmittel im Mantelraum um die Rohre und der Katalysator in den Rohren des Röhrenreaktors befinden und der Katalysator die Rohre des Röhrenreaktors bzw. den Mantelraum um die Rohre jeweils über den ganzen Querschnitt der Rohre bzw. des Mantelraumes ausfüllt, für das den Röhrenreaktor verlassende gasförmige Reaktionsgemisch Austrittstemperaturen von 180° bis 400° C aufrechterhalten werden und in einer dem Röhrenreaktor nachgeschalteten Kondensationsstufe der im Röhrenreaktor gebildete Schwefel aus dem aus dem Röhrenreaktor erhaltenen Reaktionsgemisch abgetrennt wird.

Nach dem neuen Verfahren kann die direkte katalytische Oxidation des Schwefelwasserstoffs zu elementarem Schwefel in einem einfachen Röhrenreaktor durchgeführt werden. Nach dem neuen Verfahren werden Schwefelausbeuten von über 90 % erzielt. Eine aufwendige Abtrennung des gebildeten elementaren Schwefels in flüssiger Form aus dem Röhrenreaktor ist nicht erforderlich. Das neue Verfahren weist erhebliche Vorteile gegenüber den herkömmlichen Claus-Verfahren auf, bei denen in der Regel die $H_2S$-haltigen Gase einen $H_2S$-Gehalt von mindestens 50 Vol. % aufweisen müssen, um die $H_2S$-haltigen Gase in einfacher Weise mit Luft umsetzen zu können (vgl. Chemie-Ing.-Techn., 39. Jahrgang, 1967, Seiten 515 bis 520). Dagegen können nach dem erfindungsgemäßen Verfahren $H_2S$-haltige Gase mit kleinen $H_2S$-Gehalten umgesetzt werden, ohne daß vorher eine Anreicherung auf $H_2S$-Gehalte von mindestens 50 Vol.% erforderlich ist. Es war überraschend, daß nach dem erfindungsgemäßen Verfahren Schwefelausbeuten von mehr als 90% erzielt werden können, da in der US-Patentschrift 3 393 050 beschrieben wird, daß zur Erzielung einer hohen Schwefelausbeute zwischen dem Katalysatorkorb und der Rohrwand ein Katalysator-freier Zwischenraum eingehalten werden muß und die Reaktionswärme und der gebildete elementare Schwefel in flüssiger Form gleichzeitig im Röhrenreaktor abgeführt werden müssen.

Die direkte katalytische Oxidation des $H_2S$ zu elementarem Schwefel mit Sauerstoff enthaltenden Gasen erfolgt in einem Rohrenreaktor unter indirekter Abführung der Reaktionswärme mit einem Kühlmittel, wobei sich entweder der Katalysator im Mantelraum um die Rohre und das Kühlmittel in den Rohren des Röhrenreaktors oder das Kühlmittel im Mantelraum um die Rohre und der Katalysator in den Rohren des Röhrenreaktors befinden und der Katalysator die Rohre des Röhrenreaktors bzw. den Mantelraum um die Rohre jeweils über den ganzen Querschnitt der Rohre bzw. des Mantelraumes ausfüllt. Mit besonderem Vorteil wird die direkte katalytische Oxidation isotherm durchgeführt, d.h. man hält die Reaktionstemperatur im Röhrenreaktor mit einer Schwankungsbreite von höchstens $\pm 10°$ C, vorzugsweise höchstens $\pm 5°$ C, insbesondere höchstens $\pm 3°$ C konstant. Im allgemeinen wird die katalytische Oxidation in der Weise durchgeführt, daß die Austrittstemperatur des Reaktionsgases aus dem Röhrenreaktor 180° bis 400° C, vorzugsweise 200° bis 350 ° C, insbesondere 220° bis 320° C beträgt.

Im allgemeinen wird die katalytische Oxidation bei Normaldruck oder bei leichtem Überdruck durchgeführt. Es kann jedoch auch Unterdruck angewendet werden. Im allgemeinen werden Drucke von 0,5 bis 10 bar, vorzugsweise 0,6 bis 5 bar, insbesondere 0,8 bis 2 bar angewendet.

Als Kühlmittel kommen für die katalytische Oxidation z.B, Wasser oder organische Wärmeträgeröle wie Diphenyl oder Diphenyloxid in Betracht. Vorzugsweise wird als organisches Wärmeträgeröl eine Mischung aus Diphenyl und Diphenyloxid zweckmäßig im Gewichtsverhältnis 1:20 bis 10:1, vorzugsweise 1:10 bis 5:1 verwendet. Mit besonderem Vorteil wird das azeotrope Gemisch aus 27% Diphenyl und 73% Diphenyloxid verwendet. Bei Verwendung eines organischen Wärmeträgeröls als Kühlmittel wird die Reaktionswärme zweckmäßig durch Siedekühlung abgeführt. Es kann vorteilhaft sein, die Reaktionswärme bei der Entschwefelung von $H_2S$-haltigen Gasen mit $H_2S$-Konzentrationen von etwa weniger als 5 Vol.% mit Wasser als Kühlmittel und bei der Entschwefelung von $H_2S$-haltigen Gasen mit $H_2S$-Konzentrationen von etwa mindestens 5 Vol.% mit einem organischen Wärmeträgeröl als Kühlmittel abzuführen.

Als Katalysatoren für die direkte katalytische Oxidation sind beispielsweise Katalysatoren geeignet, die ein oder mehrere Metalle und/oder deren Varbindungen, vorzugsweise die Oxide und/oder Sulfide, der Gruppen 1b bis 7b und 8 des Periodensystems der Elemente (gemäß Handbook of Chemistry and Physics, 49. Auflage, 1968 bis 1969) und der Lanthaniden enthalten.

Geeignete Katalysatoren enthalten beispielsweise Eisen, Kobalt, Nickel, Molybdän und/oder deren Sulfide oder Oxide. Die Katalysatoren können als solche oder auf einem Trägermaterial verwendet werden. Geeignete Trägermaterialien sind beispielsweise Aluminiumsilikate, Calciumaluminiumsilikate, Zeolithe und vorzugsweise Aluminiumoxid. Im allgemeinen beträgt der Gehalt der Trägerkatalysatoren an den Metallen und/oder deren Verbindungen 0,01 bis 80 Gew.%, vorzugsweise 0,1 bis 50 Gew.%, insbesondere 0,5 bis 30 Gew.%, bezogen auf den Trägerkatalysator.

Mit besonderem Vorteil werden für die katalytische Oxidation ein Nickel und Molybdän oder ein Kobalt, Nickel und Molybdän oder vorzugsweise ein Kobalt und Molybdän enthaltender Katalysator verwendet, wobei die Metalle im allgemeinen in Form ihrer Verbindungen, vorzugsweise als Oxide und/oder Sulfide, eingesetzt werden. Im allgemeinen beträgt das Gewichtsverhältnis von Nickel zu Molybdän oder Kobalt zu Molybdän oder Nickel und Kobalt zu Molybdän (berechnet als deren Oxide, Nickel als $NiO$, Kobalt als $CoO$, Molybdän als $MoO_3$) 1:50 bis 50:1, vorzugsweise 1:30 bis 10:1, insbesondere 1:10 bis 3:1. Vorzugsweise werden diese Nickel und/oder Kobalt und Molybdän bzw. deren Verbindungen enthaltenden Katalysatoren als Trägerkatalysatoren verwendet, wobei Aluminiumoxid als Trägermaterial bevorzugt ist.

Weitere Katalysatoren, die mit besonderem Vorteil für die katalytische Oxidation verwendet werden, ist ein die calcinierte Mischkristallverbindung $Fe_6Al_2(OH)_{16}CO_3$ enthaltender Katalysator. Die Calcinierung dieser Mischkristallverbindung erfolgt im allgemeinen bei Temperaturen zwischen 150° und 600°C, vorzugsweise zwischen 250° und 500°C, insbesondere zwischen 300 und 400°C. Die calcinierte Mischkristallverbindung kann als solche verwendet werden. Zweckmäßig wird sie jedoch auf einem Trägermaterial, vorzugsweise Aluminiumoxid, verwendet. Im allgemeinen beträgt der Eisengehalt des Trägerkatalysators 1 bis 50 Gew.%, vorzugsweise 2 bis 40 Gew.%, insbesondere 5 bis 30 Gew.%.

Es kann vorteilhaft sein, die katalytische Oxidation in der Weise durchzuführen, daß bei der Entschwefelung von $H_2S$-haltigen Gasen mit $H_2S$-Konzentrationen von etwas weniger als 5 Vol.% sich der Katalysator im Mantelraum befindet und das $H_2S$-haltige Gas durch den Mantelraum geleitet wird und das Kühlmittel, vorzugsweise Wasser, durch die Rohre des Röhrenreaktors geleitet wird, während bei der Entschwefelung von $H_2S$-haltigen Gasen mit $H_2S$-Konzentrationen von etwa mindestens 5 Vol.% sich der Katalysator in den Rohren des Röhrenreaktors befindet und das $H_2S$-haltige Gas durch die Rohre geleitet wird und das Kühlmittel, vorzugsweise ein organisches Wärmeträgeröl, durch den Mantelraum geleitet wird.

Der Röhrenreaktor kann aus einem Rohr, das vom Mantelraum umgeben ist, bestehen. Im allgemeinen wird der Röhrenreaktor jedoch mehrere bzw. eine Vielzahl von Rohren enthalten, die vom Mantelraum umgeben sind.

Das erfindungsgemäße Verfahren eignet sich zur Entschwefelung von $H_2S$-haltigen Gasen mit sehr geringen bis sehr hohen $H_2S$-Gehalten, z.B. mit $H_2S$-Gehalten von 0,5 bis 100 Vol.%. Besonders wirtschaftlich arbeitet das Verfahren bei $H_2S$-Gehalten von 1 bis 50 Vol.%, vorzugsweise 3 bis 30 Vol.%. Die $H_2S$-haltigen Gase werden beispielsweise als Sauergase aus partiellen Oxidationsanlagen, Kohlevergasungsanlagen, Erdgaswaschanlagen oder in Raffinerien erhalten. Das Verfahren eignet sich auch zur unmittelbaren Entschwefelung von $H_2S$-haltigen Erdgasen.

Für die katalytische Oxidation kommen als Sauerstoff enthaltende Gase beispielsweise Sauerstoff selbst, durch Sauerstoffzusatz im Sauerstoffgehalt angereicherte Luft und vorzugsweise Luft in Betracht.

Aus dem aus dem Röhrenreaktor erhaltenen Reaktionsgemisch wird der im Röhrenreaktor gebildete Schwefel in einer dem Röhrenreaktor nachgeschalteten Kondensationsstufe abgetrennt. Dies erfolgt zweckmäßig durch Kondensieren des Schwefels, z.B. in einem Wärmetauscher, und Abscheiden des kondensierten Schwefels in einem Abscheider, z.B. in einem Zyklonabscheider.

Bei der direkten katalytischen Oxidation werden, bezogen auf den im eingesetzten $H_2S$-haltigen Gas enthaltenen Schwefelwasserstoff, Schwefelausbeuten von mehr als 90 %, z.B. 93%, erhalten.

Das nach der katalytischen Oxidation und der Abscheidung des gebildeten Schwefels erhaltene Reaktionsgas kann anschließend einer konventionellen katalytischen Claus-Reaktion unterworfen werden, wodurch der gesamte $H_2S$-Umsatz zu elementarem Schwefel bis auf ca. 98% erhöht werden kan. Im allgemeinen wird man sich jedoch mit dem in der Stufe der katalytischen Oxidation erhaltenen $H_2S$-Umsatz, zu elementarem Schwefel, z.B. von 92 bis 95%, begnügen und das im aus der katalytischen Oxidation erhaltenen Reaktionsgas noch enthaltene $H_2S$ auf anderem Wege entfernen.

Ein bevorzugtes Verfahren zur Entfernung des noch im Reaktionsgas enthaltenen $H_2S$ besteht darin, daß man das aus der dem Röhrenreaktor nachgeschalteten Kondensationsstufe erhaltene Gas nach Zugabe von Wasserstoff bei erhöhter Temperatur an einem Nickel und/oder Kobalt und Molybdän enthaltenden Katalysator zur Überführung von noch in dem Gas enthaltenen Schwefelverbindungen und enthaltenem elementarem Schwefel in Schwefelwasserstoff katalytisch hydriert und den gebildeten Schwefelwasserstoff aus dem aus der Hydrierung erhaltenen Gasstrom durch Behandlung mit einem Lösungsmittel auswäscht, den Schwefelwasserstoff durch Regenerierung des beladenen Lösungsmittels abtrennt und zur katalytischen Oxidation im Röhrenreaktor zurückführt. Vorzugsweise werden für die katalytische Hydrierung solche Molybdän und Nickel und/oder vorzugsweise Kobalt enthaltenden Katalysatoren verwendet, die wie vorstehend beschrieben auch als Katalysatoren für die erfindungsgemäße direkte katalytische Oxidation der $H_2S$-haltigen Gase eingesetzt werden können. Im allgemeinen wird die Hydrierung bei Temperaturen von 200° bis 450° C, vorzugsweise 250° bis 400° C, insbesondere 280° bis 370° C durchgeführt. Aus dem aus der Hydrierung erhaltenen $H_2S$-haltigen Gas wird das $H_2S$ zweckmäßig durch eine Gaswäsche mit einem selektiven Lösungsmittel ausgewaschen. Das dabei erhaltene, das ausgewaschene $H_2S$ enthaltende Sauergas wird zweckmäßig zur katalytischen Oxidation zurückgeführt. Geeignete selektive Lösungsmittel für die Gaswäsche sind z.B. eine wäßrige Lösung des Kaliumsalzes der N,N-Dimethylaminoessigsäure (®ALKAZID-Lauge), Dialkylether von Polyethylenglykolen, z.B. der Methyl-isopropylether von Polyethylenglykolen (®SEPASOLV MPE), Triethanolamin, Methyldiethanolamin.

Ein weiteres Verfahren zur Entfernung des noch im Reaktionsgas enthaltenen Schwefelwasserstoffs besteht darin, daß man das aus der dem Röhrenreaktor nachgeschalteten Kondensationsstufe erhaltene Gas zunächst, wie im vorstehenden Absatz beschrieben, zur Überführung von noch in dem Gas enthaltenen Schwefelverbindungen und enthaltenem elementarem Schwefel in Schwefelwasserstoff katalytisch hydriert. Zur Abtrennung des in dem aus der Hydrierung erhaltenen Gas enthaltenen Schwefelwasserstoffs wird das aus der Hydrierung erhaltene Gas mit einem Sauerstoff enthaltenden Gas und Ammoniak versetzt und danach über Aktivkohle geleitet, wobei der Schwefelwasserstoff zu elementarem Schwefel oxidiert wird, der von der Aktivkohle adsorbiert wird. Als Sauerstoff enthaltende Gase kommen beispielsweise Sauerstoff selbst, durch Sauerstoffzusatz im Sauerstoffgehalt angereicherte Luft und vorzugsweise Luft in Betracht. Zusätzlich zum Sauerstoff enthaltenden Gas wird das aus der Hydrierung erhaltene Gas mit zweckmäßigerweise gasförmigem Ammoniak versetzt, das im allgemeinen in Mengen von 1 bis 20.000 mg, vorzugsweise 5 bis 2000 mg, insbesondere 10 bis 1000 mg, je $N/m^3$ Gas zugegeben wird. Das nach der Zugabe des Sauerstoff enthaltenden Gases und des Ammoniaks erhaltene Gasgemisch wird im allgemeinen bei Temperaturen von 5° bis 150° C, vorzugsweise 20° bis 120° G, insbesondere 30° bis 80° C über die Aktivkohle geleitet. Zweckmäßig werden dabei Raumgeschwindigkeiten von 10 bis 10.000 $Nm^3$, vorzugsweise 100 bis 2000 $Nm^3$, insbesondere 200 bis 1000 $Nm^3$ Gasgemisch mit je $m^3$ Aktivkohlebett und Stunde angewendet. Der Schwefelwasserstoff wird dabei selektiv zu elementarem Schwefel oxidiert, der auf der Aktivkohle adsorbiert wird.

Mit dieser Arbeitsweise ist as möglich, den $H_2S$-Gehalt in dem aus dem Aktivkohlebett erhaltenen Gas auf weniger als 1 $mg/Nm^3$ zu senken.

Das mit Schwefel beladene Aktivkohlebett wird zweckmäßig unter Gewinnung des Schwefels regeneriert. Dies geschieht beispielsweise, indem durch Überleiten von heißen Gasen, z.B. Kohlendioxid oder Stickstoff, über das mit Schwefel beladene Aktivkohlebett der Schwefel ausgetragen und anschließend aus dem heißen Gas, z.B. durch Kondensation, abgetrennt wird. Im allgemeinen betragen die Temperaturen des über das Aktivkohlebett geleiteten Gases 100° bis 700° C vorzugsweise 150° bis 600 C, insbesondere 200° bis 550° C. Weiter kann das Aktivkohlebett in der Weise regeneriert werden, daß der beladene Schwefel durch Extraktion mit Polyammoniumsulfid-Lauge ausgewaschen wird. Die folgenden Beispiele veranschaulichen die Erfindung.

**Beispiel 1**

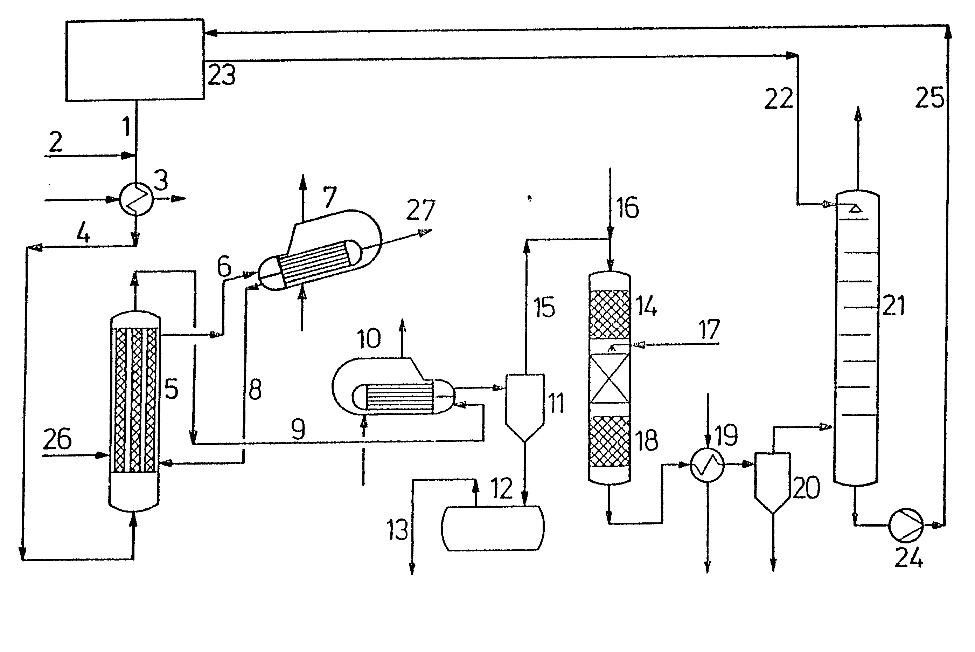

30 $Nm^3$ einer $H_2S$-haltigen Kohlensäure mit 8,5 Vol.% $H_2S$ wurde in der Anlage, die in der Figur dargestellt ist, entschwefelt. Die $H_2S$-haltige Kohlensäure stammte aus einer Methyldiethanolamin-Wäsche, in der Sauergase aus dem Spaltgas einer Synthesegas-Anlage ausgewaschen wurden, die nach dem Prinzip der nichtkatalytischen, autothermen Vergasung von Rückstandsölen arbeitet.

Die $H_2S$-haltige Kohlensäure (durch Leitung 1) wurde mit 6,22 Nm³ Luft (durch Leitung 2) gemischt und im Wärmetauscher 3 auf 180°C aufgeheizt und gelangte über Leitung 4 zum Reaktor 5. Der Reaktor bestand aus sieben Rohren mit einem Innendurchmesser von 24 mm und einer Länge von 2,8 m. In den Rohren befanden sich 15 l eines Katalysators, der entsprechend Beispiel 2 erhalten worden war. Im Mantelraum befand sich ein Gemisch von 27 % Diphenyl und 73 % Diphenyloxid (® Diphyl der Firma Bayer AG).

Durch die bei der Reaktion von $H_2S$ mit dem Luftsauerstoff frei werdende Reaktionswärme wurde Diphyl verdampft und gelangte über Leitung 6 zum Wärmetauscher 7, in dem das Diphyl unter gleichzeitiger Dampferzeugung kondensiert wurde, und gelangte über Leitung 8 zurück zum Reaktor 5. Entsprechend der Siedetemperatur von Diphyl stellte sich am Ausgang des Reaktors eine Temperatur von 255° C ein. Die Reaktionsgase, die den Reaktor 5 verließen, gelangten über Leitung 9 zum Wärmetauscher 10, in dem der bei der Reaktion gebildete Schwefel unter gleichzeitiger Dampferzeugung kondensierte, anschließend im Zyklonabscheider 11 abgeschieden und im Behälter 12 gesammelt wurde. Aus dem Behälter 12 wurde über Leitung 13 der abgeschiedene Schwefel in flüssiger Form abgezogen. Das den Zyklonabscheider 11 verlassende Gas hatte einen Restschwefelgehalt von 0,51 Vol.%, entsprechend einem Umsatz von 93 %. Dabei setzten sich die Schwefelverbindungen zu etwa 1/3 aus $SO_2$ und 2/3 aus $H_2S$ zusammen. Außerdem waren noch Spuren von $CS_2$ und COS im Gas enthalten. Weiter befanden sich im Gas dampfdruckmäßig noch etwa 2 g nichtabgeschiedener Schwefel pro Nm³ Gas.

Zur weiteren Reinigung dieses Gases mußten alle Schwefelverbindungen sowie der dampfdruckmäßig noch vorhandene elementare Schwefel in $H_2S$ umgewandelt werden. Das geschah durch Hydrierung an einem Co/Mo-Katalysator bei Temperaturen von ca. 330° bis 350° C im Hydrierreaktor 14, dem das Gas über Leitung 15 nach Zumischen von Wasserstoff über Leitung 16 zugeführt wurde. Am Ausgang des Hydrierreaktors 14 befand sich außer einer kleinen Menge COS nur noch $H_2S$ im Gas. Das unter den Bedingungen der Hydrierstufe thermodynamisch stabile COS wurde anschließend, gegebenenfalls nach Eindüsen von Wasser über Leitung 17, durch Hydrolyse im Hydrolysereaktor 18 entfernt. Nach der anschließenden Kondensation des im Gas enthaltenen Dampfs im Wärmetauscher 19 und der Abscheidung der Wassertropfen im Zyklonabscheider 20 gelangte das Gas in eine Siebbodenkolonne mit 9 Böden. Dem Gas entgegen rieselte saubere Methyldiethanolaminlauge (40 %ig) die über Leitung 22 aus dem Ausgaser der Sauergaswäsche 23 der Synthesegasanlage herangeführt wurde. Die mit $H_2S$ beladene Lauge wurde am Boden der Waschkolonne abgezogen und mit der Pumpe 24 über Leitung 25 zurück zum Ausgaser der Sauergaswäsche 23 geleitet. Das nicht umgesetzte $H_2S$ gelangte so zum Eingang des katalytischen Oxidationsreaktors zurück. Die gewaschene Kohlensäure, die einen Restgehalt an $H_2S$ von weniger als 10 mg/Nm³ hatte, konnte in die Atmosphäre abgegeben werden. Diphyl wurde über Leitung 26 in solcher Menge dem Mantelraum von Röhrenreaktor zugeführt, wie es durch Leitung 27 in geringen Mengen dampfförmig austrat.

**Beispiel 2**

Der in Beispiel 1 für die katalytische Oxidation verwendete Katalysator wurde wie folgt hergestellt:

43 l einer Lösung von 17,792 kg $FeSO_4.7 H_2O$ (64 Mole) und 21,3 Mole Aluminiumnitrat in Wasser sowie einer Lösung von 10,176 kg technische Soda in 48 l Wasser ließ man parallel in einen Rührkessel, in dem 8 l Wasser vorgelegt waren, einlaufen. Der erhaltene Niederschlag wurde abfiltriert und gewaschen. Die erhaltene Mischkristallverbindung zeigte folgende alpha-Linien im Röntgenbeugungsdiagramm (Guinier-Aufnahme):

Alpha-Werte [nm]: 0,76; 0,262; 0,230; 0,195; 0,154.

Der Filterkuchen wurde getrocknet, und man erhielt 7,85 kg trockenes Produkt. Bei der anschließenden Calcination bei 350° C ergab sich ein Gewichtsverlust der Trockenmasse von 15,94 Gew.%, so daß man schließlich 6,6 kg oxidisches Produkt erhielt. Dieses Produkt wurde mit 79 kg Böhmitpulver innig vermischt. Unter Zusatz von 56 l Wasser wurde die Mischung im Kneter zu einer Paste vermengt, die dann zu 3 mm-Strängen verpreßt wurde. Die Stränge wurden bei 110° C getrocknet und anschließend bei 400° C calciniert. Nach der Calcinierung erhielt man 84 kg Katalysator mit einem Schüttgewicht von 0,613 kg/l.

**Beispiel 3**

30 Nm³/h eines Gemisches aus 27,45 Nm³ Erdgas der Zusammensetzung

| | | |
|---|---|---|
| $CO_2$ | 1,6 Vol.% | |
| $N_2$ | 4,17 | " |
| $CH_4$ | 88,13 | " |
| $C_2H_6$ | 4,13 | " |
| $C_3H_8$ | · 1,4 | " |
| $C_4H_{10}$ | 0,37 | " |
| $C_5^+$-Kohlenwasserstoffe | 0,20 | " |

und 2,55 Nm³/h $H_2S$ ( = 8,5 Vol.% $H_2S$ bezogen auf das Gemisch) wurde nach Zumischen von 6,22 Nm³ Luft, wie im Beispiel 1, Absatz 2 beschrieben, im Röhrenreaktor entschwefelt. Das nach Abtrennen des gebildeten Schwefels am Kopf des Zyklonabscheiders abgezogene Reaktionsgas wurde anschließend zusätzlich durch eine konventionelle katalytische Claus-Stufe geleitet. Dazu wurde das Gas auf 180° C erhitzt und durch einen Reaktor geleitet, der mit 30 l Claus-Katalysator, z.B. synthetisches Aluminiumoxid (Katalysator R 10-11 der BASF), gefüllt war. Während der $H_2S$-Umsatz bei der katalytischen Oxidation im Röhrenreaktor bei 93 % lag, erhöhte er sich durch die zusätzliche Claus-Stufe auf 98 %. Aus dem aus der Claus-Stufe erhaltenen Reaktionsgas wurde der erneut gebildete Schwefel kondensiert und abgeschieden.

Das nach der Schwefelabscheidung erhaltene Gas wurde anschließend, wie in Beispiel 1 beschrieben, katalytisch hydriert, wobei die im Gas enthaltenen Schwefelverbindungen sowie der dampfdruckmäßig im Gas vorhandene elementare Schwefel zu $H_2S$ hydriert wurden.

Zur Endreinigung des Gases wurde das hydrierte Gas nach Auskondensieren von darin enthaltenem Wasser mit ca. 150 l/h Luft und 8,6 l/h $NH_3$ versetzt und bei 50°C mit einer Raumgeschwindigkeit von 500 Nm³/m³h durch ein Aktivkohlebett geleitet. Dabei wurde das restliche im Gas befindliche $H_2S$ zu Schwefel oxidiert, der auf der Aktivkohle adsorbiert wurde. Der $H_2S$-Gehalt in dem aus dem Aktivkohlebett erhaltenen Gas betrug 1 mg/Nm³.

## Patentansprüche

1. Verfahren zur Entschwefelung von $H_2S$-haltigen Gasen durch direkte katalytische Oxidation des $H_2S$ zu elementarem Schwefel mit Sauerstoff enthaltenden Gasen in einem Röhrenreaktor unter indirekter Wärmeabführung der Reaktionswärme mit einem Kühlmittel und unter Kondensation des gebildeten Schwefels, dadurch gekennzeichnet, daß sich entweder der Katalysator im Mantelraum um die Rohre und das Kühlmittel in den Rohren des Röhrenreaktors oder das Kühlmittel im Mantelraum um die Rohre und der Katalysator in den Rohren des Röhrenreaktors befinden und der Katalysator die Rohre des Röhrenreaktors bzw. den Mantelraum um die Rohre jeweils über den ganzen Querschnitt der Rohre bzw. des Mantelraumes ausfüllt, für das den Röhrenreaktor verlassende gasförmige Reaktionsgemisch Austrittstemperaturen von 180° bis 400° C aufrechterhalten werden und in einer dem Röhrenreaktor nachgeschalteten Kondensationsstufe der im Röhrenreaktor gebildete Schwefel aus dem aus dem Röhrenreaktor erhaltenen Reaktionsgemisch abgetrennt wird.

2. Verfahren nach Anspruch 1, dadurch gekennzeichnet daß die Reaktionswärme durch Siedekühlung mit einem organischen Wärmeträgeröl als Kühlmittel abgeführt wird.

3. Verfahren nach Anspruch 2, dadurch gekennzeichnet, daß als organisches Wärmeträgeröl eine Mischung aus Diphenyl und Diphenyloxid verwendet wird.

4. Verfahren nach Anspruch 1 bis 3, dadurch gekennzeichnet, daß bei der Entschwefelung von $H_2S$-haltigen Gasen mit $H_2S$-Konzentrationen von etwa weniger als 5 Vol.% sich der Katalysator im Mantelraum befindet und das $H_2S$-haltige Gas durch den Mantelraum geleitet wird und das Kühlmittel durch die Rohre des Röhrenreaktors geleitet wird und bei der Entschwefelung von $H_2S$-haltigen Gasen mit $H_2S$-Konzentrationen von etwa mindestens 5 Vol.% sich der Katalysator in den Rohren des Röhrenreaktors befindet und das $H_2S$-haltige Gas durch die Rohre geleitet wird und das Kühlmittel durch den Mantelraum geleitet wird.

5. Verfahren nach Anspruch 1, dadurch gekennzeichnet, daß die Reaktionswärme bei der Entschwefelung von $H_2S$-haltigen Gasen mit $H_2S$-Konzentrationen von etwa weniger als 5 Vol.% mit Wasser als Kühlmittel abgeführt wird.

6. Verfahren nach Anspruch 1 bis 5, dadurch gekennzeichnet, daß ein ein oder mehrere Metalle der Gruppe 1b bis 7b und 8 des Periodensystems oder der Lanthaniden und/oder deren Verbindungen enthaltender Katalysator für die katalytische Oxidation verwendet wird.

7. Verfahren nach Anspruch 1 bis 6, dadurch gekennzeichnet, daß ein die calcinierte Mischkristallverbindung $Fe_6Al_2(OH)_{16}CO_3$ enthaltender Katalysator für die katalytische Oxidation verwendet wird.

8. Verfahren nach Anspruch 1 bis 6, dadurch gekennzeichnet, daß ein Kobalt und Molybdän und/oder deren Verbindungen oder ein Nickel und Molybdän und/oder deren Verbindungen enthaltender Katalysator für die katalytische Oxidation verwendet wird.

9. Verfahren nach Anspruch 1 bis 7, dadurch gekennzeichnet, daß ein Trägerkatalysator mit Aluminiumoxid als Trägermaterial mit einem Eisengehalt von 1 bis 50 Gew.%, bezogen auf den Trägerkatalysator verwendet wird.

10. Verfahren nach Anspruch 1 bis 9, dadurch gekennzeichnet, daß man das aus der dem Röhrenreaktor nachgeschalteten Kondensationsstufe erhaltene Gas nach Zugabe von Wasserstoff bei erhöhter Temperatur an einem Nickel und/oder Kobalt und Molybdän enthaltenden Katalysator zur Überführung von noch in dem Gas enthaltenen Schwefelverbindungen und enthaltenem elementarem Schwefel in Schwefelwasserstoff katalytisch hydriert und den gebildeten Schwefelwasserstoff aus dem aus der Hydrierung erhaltenen Gasstrom durch Behandlung mit einem Lösungsmittel auswäscht, den Schwefelwasserstoff durch Regenerierung des beladenen Lösungsmittels abtrennt und zur katalytischen Oxidation im Röhrenreaktor zurückführt.

11. Verfahren nach Anspruch 1 bis 9, dadurch gekennzeichnet, daß man das aus der dem Röhrenreaktor nachgeschalteten Kondensationsstufe erhaltene Gas nach Zugabe von Wasserstoff bei erhöhter Temperatur an einem Nickel und/oder Kobalt und Molybdän enthaltenden Katalysator zur Überführung von noch in dem Gas enthaltenen Schwefelverbindungen und enthaltenem elementarem Schwefel in Schwefelwasserstoff katalytisch hydriert und zur Abtrennung des Schwefelwasserstoffs das aus der Hydrierung erhaltene Gas mit einem Sauerstoff enthaltenden Gas und Ammoniak versetzt und danach über Aktivkohle leitet und dabei den Schwefelwasserstoff zu elementarem Schwefel oxidiert, der auf der Aktivkohle adsorbiert wird.

**Claims**

1. A process for the desulfurization of $H_2S$-containing gases by direct catalytic oxidation of the $H_2S$ to elementary sulfur by means of oxygen-containing gases in a tubular reactor, with indirect removal of the heat of reaction by means of a coolant and with condensation of the sulfur formed, wherein either the catalyst is present in the jacket space around the tubes and the coolant is present in the tubes of the reactor or the coolant is present in the jacket space around the tubes and the catalyst is present in the tubes of the reactor, and the catalyst fills the tubes of the tubular reactor or the jacket space around the tubes over the entire cross-section of the tubes or the jacket space respectively, the exit temperature of the gaseous reaction mixture leaving the tubular reactor is kept at 180-400° C and the sulfur formed in the tubular reactor is separated out of the reaction mixture, obtained in the reactor, in a condensation stage downstream of the reactor.

2. A process as claimed in claim 1, wherein the heat of reaction is removed by evaporative cooling using an organic heat transfer oil as the coolant.

3. A process as claimed in claim 2, wherein the organic heat transfer oil used is a mixture of diphenyl and diphenyl ether.

4. A process as claimed in claims 1 to 3, wherein, when desulfurizing gases containing less than about 5% by volume of $H_2S$, the catalyst is present in the jacket space, the $H_2S$-containing gas is passed through this space and the coolant is passed through the tubes of the reactor, while when desulfurizing gases containing from about 5% by volume of $H_2S$ upwards, the catalyst is present in the tubes of the reactor, the $H_2S$-containing gas is passed through the tubes and the coolant is passed through the jacket space.

5. A process as claimed in claim 1, wherein the heat of reaction from the desulfurization of gases containing less than about 5% by volume of $H_2S$ is removed with water as the coolant.

6. A process as claimed in claims 1 to 5, wherein a catalyst containing one or more metals of groups 1b to 7b and 8 of the periodic table or of the lanthanides and/or their compounds is used for the catalytic oxidation.

7. A process as claimed in claims 1 to 6, wherein a catalyst containing the calcined mixed crystal compound $Fe_6Al_2(OH)_{16}CO_3$ is used for the catalytic oxidation.

8. A process as claimed in claims 1 to 6, wherein a catalyst containing cobalt and molybdenum and/or their compounds, or containing nickel and molybdenum and/or their compounds is used for the catalytic oxidation.

9. A process as claimed in claims 1 to 7, wherein a supported catalyst, with alumina as the carrier and containing from 1 to 50% by weight, based on the supported catalyst, of iron is used.

10. A process as claimed in claims 1 to 9, wherein the gas obtained from the condensation stage downstream of the tubular reactor is mixed with hydrogen and hydrogenated catalytically at elevated temperature over a catalyst containing nickel and/or cobalt and molybdenum, in order to convert residual sulfur compounds and elementary sulfur present in the gas into hydrogen sulfide, the hydrogen sulfide formed is scrubbed out of the gas stream, obtained from the hydrogenation, by treatment with a solvent, and the hydrogen sulfide is isolated by regenerating the laden solvent and is recycled to the catalytic oxidation in the tubular reactor.

11. A process as claimed in claims 1 to 9, wherein the gas obtained from the condensation stage downstream of the tubular reactor is mixed with hydrogen and hydrogenated catalytically at elevated temperature over a catalyst containing nickel and/or cobalt and molybdenum to convert residual sulfur compounds and elementary sulfur present in the gas into hydrogen sulfide and to remove the hydrogen sulfide, the gas obtained from the hydrogenation is mixed with an oxygen-containing gas and ammonia and the mixture is then passed over active carbon to oxidize the hydrogen sulfide to elementary sulfur which is adsorbed on the active carbon.

## Revendications

1. Procédé de désulfuration de gaz contenant du $H_2S$ par une oxydation directe catalysée du $H_2S$ en soufre élémentaire par des mélanges gazeux contenant de l'oxygène dans un réacteur à faisceau tubulaire avec élimination indirecte de la chaleur de réaction à l'aide d'un milieu réfrigérant et avec condensation du soufre formé, caractérisé en ce que, soit le catalyseur est disposé dans l'enveloppe entourant les tubes et le milieu réfrigérant circule dans les tubes du réacteur, soit le milieu réfrigérant circule dans l'enveloppe entourant les tubes et le catalyseur est disposé dans les tubes du réacteur, le catalyseur occupant entièrement les tubes ou l'enveloppe sur toute la section de ceux-ci ou de celle-ci, le mélange réactionnel gazeux quittant le réacteur tubulaire à une température de sortie comprise entre 180 et 400°C et le soufre formé dans le réacteur à faisceau tubulaire étant séparé du mélange réactionnel sortant du réacteur tubulaire dans un stade de condensation disposé en aval du réacteur tubulaire.

2. Procédé suivant la revendication 1, caractérisé en ce que la chaleur de la réaction est évacuée par refroidissement par ébullition d'une huile organique caloporteuse servant de milieu réfrigérant.

3. Procédé suivant la revendication 2, caractérisé en ce que l'huile organique caloporteuse est un mélange de diphényle et d'oxyde de diphényle.

4. Procédé suivant l'une des revendications 1 à 3, caractérisé en ce que, pour la désulfuration de gaz avec des teneurs en $H_2S$ inférieures à environ 5 % en volume, le catalyseur est disposé dans l'enveloppe et le gaz contenant du $H_2S$ passe à travers celle-ci, tandis que le milieu réfrigérant circule dans les tubes du réacteur à faisceau tubulaire, tandis que pour la désulfuration de gaz avec des teneurs en $H_2S$ supérieures à environ 5 % en volume, le catalyseur est disposé dans les tubes du réacteur à faisceau tubulaire et le gaz contenant du $H_2S$ traverse ces tubes, tandis que le milieu réfrigérant circule à travers l'enveloppe.

5. Procédé suivant la revendication 1, caractérisé en ce que, lors de la désulfuration de gaz avec une teneur en $H_2S$ inférieure à environ 5 % en volume, la chaleur de la réaction est évacuée à l'aide d'eau servant de milieu réfrigérant.

6. Procédé suivant l'une des revendications 1 à 5, caractérisé en ce que le catalyseur utilisé pour l'oxydation catalysée est un catalyseur comprenant un ou plusieurs métaux des groupes 1b à 7b et 8 du Système périodique ou des lanthanides et (ou) des dérivés de ceux-ci.

7. Procédé suivant l'une des revendications 1 à 6, caractérisé en ce que le catalyseur utilisé pour l'oxydation catalysée est un catalyseur contenant un composé à cristaux mixtes $Fe_6Al_2(OH)_{16}CO_3$ calciné.

8. Procédé suivant l'une des revendications 1 à 6, caractérisé en ce que le catalyseur utilisé pour l'oxydation catalysée est un catalyseur contenant du cobalt et du molybdène et (ou) des dérivés de ceux-ci ou du nickel et du molybdène et (ou) des dérivés de ceux-ci.

9. Procédé suivant l'une des revendications 1 à 7, caractérisé en ce que l'on emploie un catalyseur sur support, dont le matériau support est de l'oxyde d'aluminium, avec une teneur en fer comprise entre 1 et 50 % du poids du catalyseur sur support.

10. Procédé suivant l'une des revendications 1 à 9, caractérisé en ce que l'on soumet le produit gazeux provenant du stade de condensation disposé en aval du réacteur à faisceau tubulaire, après addition d'hydrogène, à une hydrogénation catalysée par passage à température accrue sur un catalyseur au nickel et (ou) au cobalt et au molybdène en vue de la transformation des composés soufrés et du soufre élémentaire encore présents dans le produit gazeux en hydrogène sulfuré, l'hydrogène sulfuré formé étant extrait du courant gazeux provenant de l'hydrogénation à l'aide d'un solvant, puis séparé du solvant chargé par régénération de celui-ci et recyclé dans l'oxydation catalysée dans le réacteur à faisceau tubulaire.

11. Procédé suivant l'une des revendications 1 à 9, caractérisé en ce que l'on soumet le produit gazeux provenant du stade de condensation disposé en aval du réacteur à faisceau tubulaire, après addition d'hydrogène, à une hydrogénation catalysée par passage à température accrue sur un catalyseur au nickel et (ou) au cobalt et au molybdène en vue de la transformation des composés soufrés et du soufre élémentaire encore présents dans le produit gazeux en hydrogène sulfuré, l'hydrogène sulfuré formé étant séparé par addition au produit gazeux provenant de l'hydrogénation d'un mélange gazeux contenant de l'oxygène et d'ammoniac et passage sur du charbon activé, le soufre élémentaire formé par l'oxydation de l'hydrogène sulfuré étant adsorbé par le charbon actif.